# EUROPEAN PATENT APPLICATION

(11) **EP 2 749 931 A1**
(43) Date of publication of application: **02.07.2014**
(21) Application number: 13164933.7
(22) Date of filing: 23.04.2013
(51) Int. Cl.: G02F 1/1333, G02F 1/1337, G09F 9/30

(54) **Curved liquid crystal display device**

(30) Priority: 26.12.2012 KR 20120153399
(71) Applicant: Samsung Display Co., Ltd., Gyeonggi-Do (KR)
(72) Inventor: Lee, Cheong Hun, Asan-si, Chungcheongnam-do (KR); Park, MinWook, 205-401 Asan-si, Chungcheongnam-do (KR); Park, Joohwan, 1206-1401 Yongin-si, Gyeonggi-do (KR); Son, Jeongman, 201-1907 Suwon-si, Gyeonggi-do (KR); Lee, Cheolse, 106-101 Daegu (KR)
(74) Representative: Dr. Weitzel & Partner

(57) **Abstract**

A liquid crystal display device (1000) includes a first curved substrate (10) and a second curved substrate (20) overlapping the first curved substrate. The liquid crystal display device (1000 further includes pixel electrodes (PE) formed on the first curved substrate (10) so as to be disposed between the first curved substrate (10) and the second curved substrate (20), each pixel electrode (PE) including a plurality of branch sub-electrodes spaced by slits and connected at their ends by a connection sub-electrode. The liquid crystal display device (1000) further includes a common electrode (CE) that does not have any slits and overlaps the branch sub-electrodes of each pixel electrode (PE). The display device further includes a liquid crystal layer (LC) disposed between the pixel electrodes (PE) and the common electrode (CE).

## Description

### CROSS-REFERENCE TO RELATED APPLICATIONS

This application claims priority to and benefit of Korean Patent Application No. 10-2012-0153399 filed on December 26, 2012 in the Korean Intellectual Property Office, the entire contents of which are incorporated herein by reference.

### BACKGROUND

The present invention is related to a curved liquid crystal display device.

A liquid crystal display device may include a lower substrate, an upper substrate, and a liquid crystal layer disposed between the lower substrate and the upper substrate. The lower substrate may include thin film transistors and pixel electrodes, and the upper substrate may include a common electrode, a black matrix, and a color filter. The liquid crystal display device may control transmittance of light transmitted through the liquid crystal layer by controlling arrangement of liquid crystal particles in the liquid crystal layer according to an electric field applied to the liquid crystal layer.

Each of the common electrode and the pixel electrode may have a plurality of slits.

Liquid crystal displays device may typically have a flat shape. Nevertheless, curved liquid crystal display devices have been implemented.

In a curved liquid crystal display device, depending on viewing angles of a viewer, there may be misalignment between an upper substrate (which may include a common electrode having slits, a color filter, and a black matrix) and a lower substrate (which may include pixel electrodes). As a result, the viewer may perceive substantial color deviation and/or substantial luminance variation, and the image quality provided by the curved liquid crystal display may be unsatisfactory.

### SUMMARY

One or more embodiments of the invention may be related to a display device that may include a first curved substrate and a second curved substrate overlapping the first curved substrate. The display device may further include a pixel electrode disposed between the first curved substrate and the second curved substrate, the pixel electrode including a first branch electrode and a second branch electrode that is spaced from the first branch electrode. The display device may further include a common electrode including a slitless portion that completely overlaps both the first branch electrode and the second branch electrode and does not have any slits. The display device may further include a liquid crystal element disposed between the pixel electrode and the common electrode. The liquid crystal element may represent at least a portion of the liquid crystal layer LC discussed in the section of Detailed Description.

In one or more embodiments, the pixel electrode may include more than three branch electrodes, and the slitless portion of the common electrode completely overlaps all of the more than three branch electrodes.

According embodiments of the invention, for various viewing angles, the (minimum) distance between the first branch electrode and the common electrode is equal to the (minimum) distance between the second branch electrode and the common electrode. Advantageously, the display device may provide substantially consistent and/or satisfactory image quality for various viewing angles.

In one or more embodiments, the display device may include a color filter that overlaps the pixel electrode, wherein the pixel electrode may be disposed between the color filter and the liquid crystal element.

In one or more embodiments, the display device may include a black matrix, wherein a portion of the black matrix may overlap an edge portion of the color filter and may be disposed between the edge portion of the color filter and the slitless portion.

In one or more embodiments, the display device may include an alignment film configured to pretilt particles in the liquid crystal element. The display device may further include a black matrix, wherein a portion of the black matrix may overlap an edge portion of the color filter and may be disposed between the edge portion of the color filter and the alignment film.

In one or more embodiments, the pixel electrode may further include a third branch electrode and a connection electrode. Each of the first branch electrode and the second branch electrode may extend in a first direction. The third branch electrode may extend in a second direction that is different from the first direction. The connection electrode may be electrically and mechanically connected to both ends of the first branch electrode, both ends of the second branch electrode, and both ends of the third branch electrode. The slitless portion of the common electrode may further overlap at least one of the third branch electrode and the connection electrode.

In one or more embodiments, the slitless portion of the common electrode may overlap both the third branch electrode and the connection electrode.

In one or more embodiments, the first curved substrate may include a first curvature that is associated with a first radius of curvature, the second curved substrate may include a second curvature that is associated with a second radius of curvature, and the first radius of curvature may be equal to the second radius of curvature.

In one or more embodiments, the first curved substrate may include a first curvature that is associated with a first radius of curvature, and the first radius of curvature may be less than 5000 mm.

In one or more embodiments, the first curved substrate may include plurality of curvatures.

In one or more embodiments, the display device may include an alignment film configured to pretilt particles in the liquid crystal element, wherein the pixel electrode may be disposed between the color filter and the alignment film.

In one or more embodiments, the display device may include a curved backlight unit configured to provide light, wherein the color filter may be disposed between the pixel electrode and the curved backlight unit.

In one or more embodiments, the display device may include a black matrix configured to block a portion of the light, wherein an edge portion of the color filter may be disposed between the curved backlight unit and a portion of the black matrix.

In one or more embodiments, the display device may include a curved backlight unit configured to provide light, wherein the pixel electrode may be disposed between the color filter and the curved backlight unit.

In one or more embodiments, the display device may include a black matrix configured to block a portion of the light, wherein a portion of the black matrix may be disposed between the curved backlight unit and an edge portion of the color filter.

One or more embodiments of the invention may be related to a display device that may include a first curved substrate and a second curved substrate overlapping the first curved substrate. The display device may further include a pixel electrode disposed between the first curved substrate and the second curved substrate, the pixel electrode including a plurality of branch electrodes spaced from one another. The display device may further include a common electrode disposed between the first curved substrate and the second curved substrate. The display device may further include a liquid crystal element disposed between the pixel electrode and the common electrode. The display device may further include a color filter overlapping the pixel electrode, wherein the pixel electrode may be disposed between the color filter and the liquid crystal element.

In one or more embodiments, the display device may include a curved insulation film disposed between the color filter and the liquid crystal element, wherein the pixel electrode may be disposed between the curved insulation film and the liquid crystal element.

In one or more embodiments, the display device may include a black matrix, wherein a portion of the black matrix may overlap an edge portion of the color filter and may be disposed between the edge portion of the color filter and a portion of the curved insulation film.

In one or more embodiments, the display device may include a curved alignment layer configured to pretilt particles of the liquid crystal element, wherein the curved alignment layer may directly contact both the pixel electrode and the insulation film.

According to embodiments of the invention, the distance between the pixel electrode and the color filter and the distance between the pixel electrode and the black matrix may be minimized. Advantageous, substantially accurate colors and satisfactory luminance may be provided for various viewing angles.

One or more embodiments of the invention may be related to a display device that may include a first curved substrate and a second curved substrate overlapping the first curved substrate. The display device may further include a common electrode disposed between the first curved substrate and the second curved substrate. The common electrode may include a plurality of partial common electrodes spaced from one another. The plurality of partial common electrodes may include a first partial common electrode and a second partial common electrode. The display device may further include a pixel electrode disposed between the first curved substrate and the second curved substrate. The pixel electrode may include a plurality of branch electrodes spaced from one another. The plurality of branch electrodes may include a first branch electrode and a second branch electrode. The first branch electrode and the second branch electrode may be disposed closer to the first partial common electrode than any other branch electrodes of the pixel electrode. A distance between the first partial common electrode and the first branch electrode may be equal to a distance between the first partial common electrode and the second branch electrode and may be equal to a distance between the second partial common electrode and the second branch electrode. The display device may further include a liquid crystal element disposed between the pixel electrode and the common electrode.

In one or more embodiments, the plurality of branch electrodes may further include a third branch electrode. The third branch electrode and the second branch electrode may be disposed closer to the second partial common electrode than any other branch electrodes of the pixel electrode. The distance between the first partial common electrode and the first branch electrode may be further equal to a distance between the second partial common electrode and the third branch electrode.

In one or more embodiments, the display device may include a color filter that overlaps the pixel electrode, wherein the pixel electrode may be disposed between the color filter and the liquid crystal element.

According embodiments of the invention, for various viewing angles, the (minimum) distance between the first branch electrode and the common electrode is equal to the (minimum) distance between the second branch electrode and the common electrode. Advantageously, the display device may provide substantially consistent and/or satisfactory image quality for various viewing angles.

According to embodiments of the invention, the distance between the pixel electrode and the color filter may be minimized. Advantageous, substantially accurate colors may be provided for various viewing angles.

One or more embodiments of the invention may be related to a curved liquid crystal display device that may include a first substrate, a second substrate, a pixel electrode, a common electrode, and a liquid crystal layer.

The first substrate may have a first curvature and may correspond to at least a pixel region. The second substrate may have a second curvature that is substantially parallel to and/or substantially similar to the first curvature. The second substrate may overlap the first substrate.

The pixel electrode may be formed on the first substrate and may have a plurality of branch electrodes with slits being located between the branch electrodes.

The common electrode may be formed on the second substrate, may overlap the pixel electrode, and may include a continuous plate that overlaps the branch electrodes and does not have any slits.

The liquid crystal layer may be disposed between the first substrate and the second substrate for controlling light transmission.

The curved liquid crystal display device may further include a color filter disposed between the first substrate and the pixel electrode and corresponding to the pixel region. The color filter may overlap the pixel electrode. The pixel electrode may be disposed between the color filter and the liquid crystal layer. The curve liquid crystal display device may further include a black matrix disposed between the first substrate and the pixel electrode and corresponding to an area between adjacent pixel regions.

### BRIEF DESCRIPTION OF THE FIGURES

The features and advantages related to the invention will become apparent from the following description with reference to the following figures, wherein like reference numerals may refer to like parts throughout the various figures unless otherwise specified.

FIG. 1 is a top view (or plan view) illustrating a curved liquid crystal display device according to one or more embodiments of the invention.

FIG. 2 is a cross-sectional view taken along a line I-I' indicated in FIG. 1.

FIG. 3 is a ground plan of a display panel for describing FIGS. 4 to 7.

FIG. 4 is a graph illustrating luminance variation according to regions of a display panel of a typical curved liquid crystal display device.

FIG. 5 is a graph illustrating misalignment according to regions of a display panel of a typical curved liquid crystal display device.

FIG. 6 is a graph illustrating color deviation according to viewing angle values for a typical curved liquid crystal display device.

FIG. 7 is a graph illustrating color deviation according to viewing angles with respect to a curved liquid crystal display device according to one or more embodiments of the invention.

FIG. 8 is a cross-sectional view illustrating a curved liquid crystal display device according to one or more embodiments of the invention.

FIG. 9A is a diagram schematically illustrating a typical curved liquid crystal display device.

FIG. 9B is a diagram schematically illustrating a curved liquid crystal display device according to one or more embodiments of the invention.

FIG. 10 is a cross-sectional view illustrating a curved liquid crystal display device according to one or more embodiments of the invention.

FIG. 11A is a cross-sectional view illustrating a display panel of a typical curved liquid crystal display device as viewed by a viewer at a viewing angle of 0°.

FIG. 11B is a cross-sectional view illustrating a display panel of a typical curved liquid crystal display device viewed by a viewer at a left viewing angle.

FIG. 12 is a cross-sectional view illustrating a display panel of a curved liquid crystal display device according to one or more embodiments of the invention.

### DETAILED DESCRIPTION

Embodiments of the invention will be described in detail with reference to the accompanying drawings. The invention, however, may be embodied in various different forms, and should not be construed as being limited only to the illustrated embodiments. Rather, these embodiments are provided as examples so that this disclosure will be thorough and complete, and will fully convey the concept of the invention to those skilled in the art. Accordingly, known processes, elements, and techniques may not be described with respect to some of the embodiments of the invention. Unless otherwise noted, like reference numerals may denote like elements throughout the attached drawings and written description, and thus descriptions may not be repeated. In the drawings, sizes and/or relative sizes of layers and/or regions may be exaggerated for clarity.

Although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the invention. The description of an element as a "first" element may not require or imply the presence of a second element or other elements. The terms first, second, etc. may also be used herein to differentiate different categories of elements. For conciseness, the terms first, second, etc. may represent first-type (or first-category), second-type (or second-category), etc., respectively.

Spatially relative terms, such as "beneath", "below", "lower", "under", "above", "upper", and the like, may be used herein for ease of description to describe one element or feature's relationship to another element(s) or feature(s) as illustrated in the figures. The spatially relative terms may encompass different orientations of the device in use or operation in addition to the orientation depicted in the figures. For example, if the device in the figures is turned over, elements described as "below" or "beneath" or "under" other elements or features would then be oriented "above" the other elements or features. Thus, the terms "below" and "under" can encompass both an orientation of above and below. The device may be otherwise oriented (rotated 90 degrees or at other orientations) and the spatially relative descriptors used herein interpreted accordingly. If a layer is referred to as being "between" two layers, it can be the only layer between the two layers, or one or more intervening layers may also be present.

The terminology used herein is for the purpose of describing particular embodiments only and is not intended to be limiting of the invention. As used herein, the singular forms "a", "an", and "the" may include the plural forms as well, unless the context clearly indicates otherwise. The terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" may include any and all combinations of one or more of the associated listed items. The term "exemplary" is intended to refer to an example or illustration.

If an element or layer is referred to as being "on", "connected to", "coupled to", or "adjacent to" another element or layer, it can be directly on, connected, coupled, or adjacent to the other element or layer, or intervening elements or layers may be present. In contrast, if an element is referred to as being "directly on," "directly connected to", "directly coupled to", or "immediately adjacent to" another element or layer, there are no (intended) intervening elements or layers (except possible environmental elements, such as air) present.

Unless otherwise defined, all terms (including technical and scientific terms) used herein have the same meaning as commonly understood by one of ordinary skill in the art. Terms, such as those defined in commonly used dictionaries, should be interpreted as having a meaning that is consistent with their meaning in the context of the relevant art and/or the present specification and should not be interpreted in an idealized or overly formal sense unless expressly so defined herein.

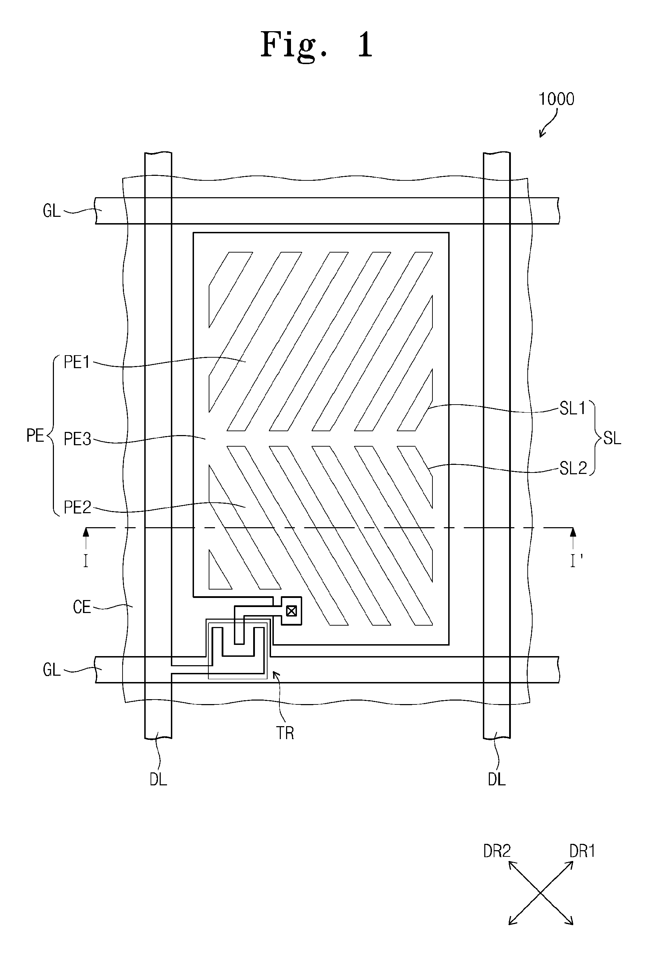

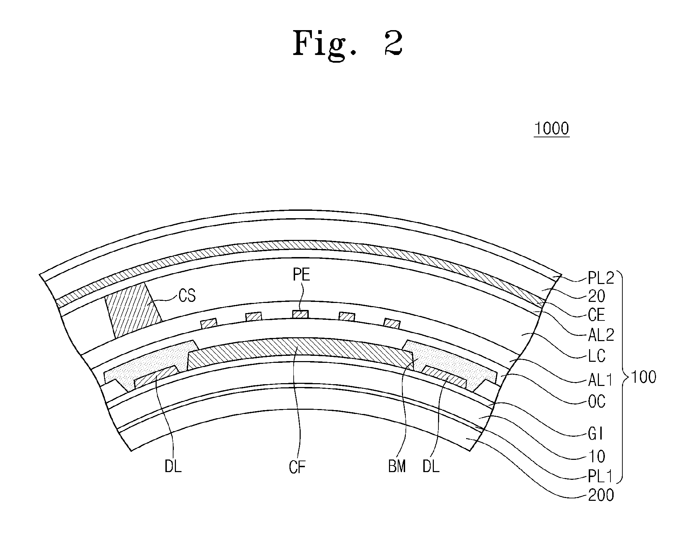

FIG. 1 is a top view (or plan view) illustrating a curved liquid crystal display device 1000 (or display device 1000, for conciseness) according to one or more embodiments of the invention. FIG. 2 is a cross-sectional view taken along a line I-I' indicated in FIG. 1.

For ease of description, one pixel of the display device 1000 may be illustrated in FIGS. 1 and 2 as an example. The display device 1000may include a plurality of pixels (or pixel regions) arranged in a matrix that includes a plurality of columns and a plurality of rows. The pixels may have the same structure, and one pixel may be described as an example for ease of description. In one or more embodiments, the pixel may have a rectangular shape. In one or more embodiments, the pixel in a plan view may have one or more of a V shape, a Z shape, and so on.

Referring to FIGS. 1 and 2, the display device 1000 may include a display panel 100 and a backlight unit 200.

The display panel 100 may include a first substrate 10, a second substrate 20, pixel electrodes PE, a common electrode CE, and a liquid crystal layer LC.

The display panel 100 may have a curved shape that has a first curvature. In one or more embodiments, as illustrated in FIG. 2, the display device 1000 and the display panel 100 may be convex toward a viewer of an image displayed by the display device 1000. In one or more embodiments, the display device 1000 can be concavely curved with respect to a viewer of an image displayed by the display device 1000. In one or more embodiments, the display panel 100 may have the first curvature in accordance with the shape of the first substrate 10 and/or the shape of the second substrate 20. In one or more embodiments, the first substrate 10 and/or the second substrate 20 may be flexible, and the shape and/or curvature of the display panel 100 may be defined by a frame. In one or more embodiments, after relevant elements are formed and bonded at the substrates 10 and 20 and bonded, the display panel 100 may be curved and/or shaped according to a frame (not shown) to have the first curvature. The frame may have one or more of various shapes. In one or more embodiments, the frame may include a receiving space that has a shape of the first curvature. The display panel 100 may be flat and flexible, and may be installed in the receiving space of the frame so as to be curved to have the first curvature.

The first curvature may include one or more curved portions corresponding to one or more curvature radii. In one or more embodiments, as illustrated in FIG. 2, the display panel 100 may have a curved portion corresponding to one curvature radius. In one or more embodiments, the display panel 100 may include a plurality of curved portions corresponding to a plurality of curvature radii.

In one or more embodiments, the effects and advantages of the invention may be more significant if the first curvature is more curved, i.e., if the first curvature corresponds to a smaller radius of curvature. In one or more embodiments, the first curvature may have a radius of curvature that is less than 500 mm.

The first substrate 10 may be a transparent insulation substrate, and may be formed of silicon, glass, or plastic. The first substrate 10 may be curved to have the first curvature.

The display panel 100 may further include gate lines GL, data lines DL, and thin film transistors TR. The gate lines GL and the data lines DL may be disposed on the first substrate 10 and may intersect each other. The gate lines GL and the data lines DL may be electrically insulated by a gate insulation film GI. A plurality of pixel regions may be defined by the gate lines GL and the data lines DL and may have respective pixel electrodes PE.

In each pixel region, the thin film transistor TR may be connected to the gate line GL and the data line DL to apply a data voltage to the pixel electrode PE.

The display panel 100 may further comprise a plurality of color filters CF and at least a black matrix BM.

A color filter CF may be disposed between the first substrate 10 and a corresponding pixel electrode PE.

The color filter CF may be used to display a predetermined color. The color filter CF may be one of a red color filter, a green color filter, and a blue color filter, and may be provided to correspond to a pixel electrode PE. In one or more embodiments, the color filter CF may be a white color filter. In one or more embodiments, adjacent pixels may have color filters of different colors.

The black matrix BM may overlap the first substrate 10 and may overlap regions between adjacent pixel electrodes PE in a plan view of the display panel 100. The black matrix BM may overlap at least one side of the color filter CF. The black matrix BM may cover the gate line GL, the data line DL, and the thin film transistor TR in the plan view of the display panel 100.

In one or more embodiments, the black matrix BM may overlap at least two sides (or edges) of the color filter CF.

The black matrix BM may block a part of light going through the display panel 100. The black matrix BM may block leakage of light due to abnormal movement of liquid crystal particles included in the liquid crystal layer LC and/or may prevent mixing of colors shown at an edge of the color filter CF.

A planarizing layer OC may be provided on the black matrix BM. The planarizing layer OC may be formed of an organic or inorganic insulation film. The planarizing layer OC may not be required in one or more embodiments.

The pixel electrode PE may be provided on the planarizing layer OC. The pixel electrode PE may have a plurality of slits SL.

The slits SL may include a plurality of first-category slits SL1 (or first slits SL1) that includes a first slit SL1 and a plurality of second-category slits SL2 (or second slits SL2) that includes a second slit SL2, wherein the first slit SL1 and the second SL2 may extend in different directions. The first slit SL1 may extend in a first direction DR1, and the second slit SL2 may extend in a second direction DR2.

The pixel electrode PE may include a first sub-pixel electrode PE1, a second sub-pixel electrode PE2, and a connection electrode PE3.

Branch electrodes of the first sub-pixel electrode PE1 may be disposed between adjacent first slits SL1. Thus, the branch electrodes of the first sub-pixel electrode PE1 may extend in the first direction DR1. The branch electrodes of the first sub-pixel electrode PE1 may be spaced from one another in the second direction DR2.

Branch electrodes of the second sub-pixel electrode PE2 may be disposed between adjacent second slits SL2. Thus, the branch electrodes of the second sub-pixel electrode PE2 may extend in the second direction DR2. The branch electrodes of the second sub-pixel electrode PE2 may be spaced from one another in the first direction DR1.

The connection electrode PE3 may be (electrically and mechanically) connected with ends of portions of the first sub-pixel electrode PE1 and may be (electrically and mechanically) connected with ends of portions of the second sub-pixel electrode PE2. In one or more embodiments, as illustrated in FIG. 1, the connection electrode PE3 may include a first portion disposed along an edge of the pixel electrode PE and may include a second portion traversing a centric region of the pixel electrode PE in a horizontal direction.

The pixel electrode PE may receive a data voltage applied from a thin film transistor TR.

The pixel electrode PE may be formed of a transparent conductive material, for example, ITO (Indium Tin Oxide), IZO (Indium Zinc Oxide), or ITZO (Indium Tin Zinc Oxide).

The second substrate 20 may overlap the first substrate 10 and may be formed of a transparent insulation substrate material (e.g., silicon, glass, or plastic). The second substrate 20 may be curved to have the first curvature and may be substantially concentric with and/or parallel to the first substrate 10 and a top surface of the planarizing layer OC.

The common electrode CE may be provided on the second substrate 20. The common electrode CE may be formed of an entire plate. The common electrode CE may receive a constant common voltage.

The common electrode CE may be formed of a transparent conductive material, for example, ITO (Indium Tin Oxide), IZO (Indium Zinc Oxide), or ITZO (Indium Tin Zinc Oxide).

The display panel 100 may further comprise a first alignment layer AL1 and a second alignment layer AL2.

The first alignment layer AL1 may be disposed on the pixel electrode PE, and the second alignment layer AL2 may be disposed on the common electrode CE may overlap the first alignment layer AL1.

The alignment layers AL1 and AL2 may have the same pretilt angle. The alignment layers AL1 and AL2 may have the pretilt angle by depositing an alignment liquid, providing a photopolymerizable monomer between the first substrate 10 and the second substrate 20 together with a liquid crystal particle, and hardening the photopolymerizable monomer.

The liquid crystal layer LC may be disposed between the first substrate 10 and the second substrate 20. The liquid crystal layer LC may include a plurality of liquid crystal particles. The liquid crystal particles may adjust the transmittance of light going through the liquid crystal layer LC by changing arrangement and/or orientation according to an electric field formed by a difference between a data voltage applied to the pixel electrode PE and a common voltage applied to the common electrode CE. In one or more embodiments, the liquid crystal particles may be formed of a material having refractive anisotropy and dielectric anisotropy.

The display panel 100 may further comprise a column spacer CS. The column spacer CS may be disposed between the first substrate 10 and the second substrate 20. The spacer CS may overlap the black matrix BM. The column spacer CS may maintain a cell gap between the first substrate 10 and the second substrate 20.

The display panel 100 may further comprise a first polarizing plate PL1 and a second polarizing plate PL2 overlapping each other; both the substrates 10 and 20 may be disposed between the polarizing plates PL1 and PL2. The first polarizing plate PL1 may be attached to an outer surface of the first substrate 10 and may be disposed between the first substrate 10 and the backlight unit 200. The second polarizing plate PL2 may be attached to an outer surface of the second substrate 20 and may be disposed between the second substrate 20 and a viewer of an image displayed by the display device 1000. A light penetration axis of the first polarizing plate PL1 may be perpendicular to a light penetration axis of the second polarizing plate PL2.

The backlight unit 200 may be disposed such that the first substrate 10 is disposed between the backlight 200 and the liquid crystal layer LC and such that the display panel 100 may be disposed between the backlight unit 200 and a viewer of a viewer of an image displayed by the display device 1000. The backlight unit 200 may have a curved shape that has the first curvature.

The backlight unit 200 may provide light to the display panel 100.

Although not shown in figures, the backlight unit 200 may include a light guide plate, a light source, and an optical sheet. The light guide plate may guide light provided from the light source in a direction toward the display panel 100. The light source may be provided to correspond to a lateral side of the light guide plate, and may provide light to the light guide plate. Alternatively or additionally, the light source may be provided to correspond to a lower surface of the light guide plate. The light source may include at least one or more light source units, such as one or more LEDs (Light Emitting Diodes) and/or one or more CCFLs (Cold Cathode Fluorescent Lamps).

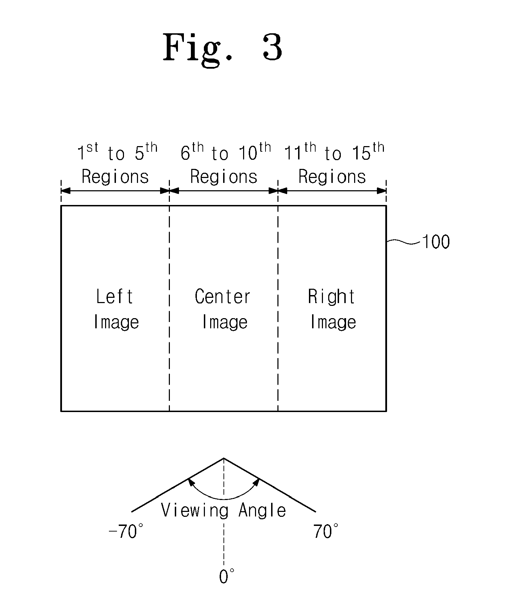

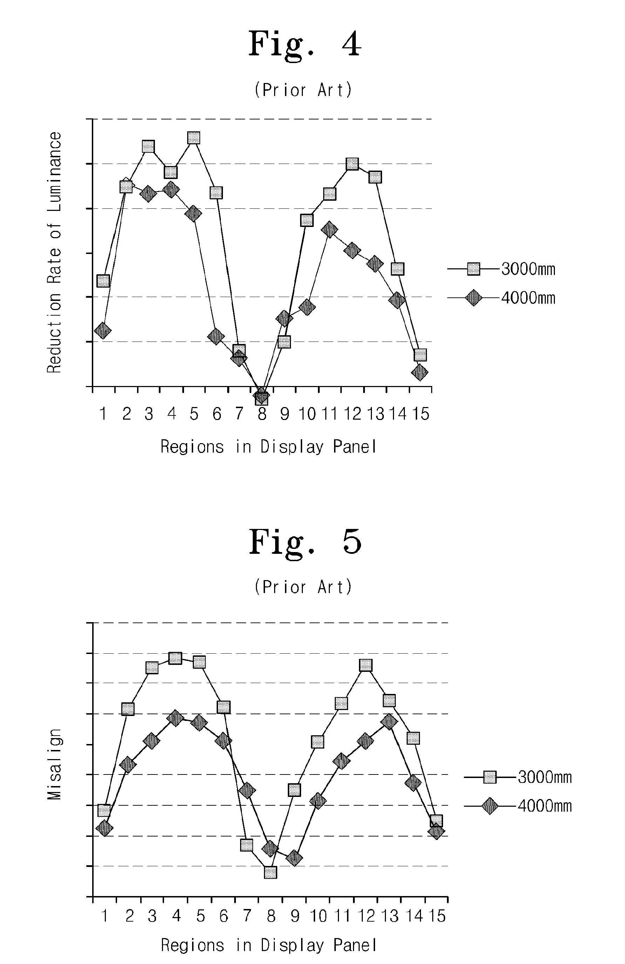

FIG. 3 is a ground plan of a display panel for describing FIGS. 4 to 7.

Referring to FIG. 3, a display panel 100 may be divided into three image regions: a left image region, a center image region, and a right image region. The left region may include 1^{st} to 5^{th} regions, the center region may include 6^{th} to 10^{th} regions, and the right region may include 11^{th} to 15^{th} regions.

An image displayed at the left image region may be referred to as a left image, an image displayed at the center image region may be referred to as a center image, and an image displayed at the right image region may be referred to as a right image.

In one of more embodiments, the display panel 100 may display the same image at the left region, the center region, and the right region.

A viewing angle may mean an angle formed by a geometric line perpendicular to the center of the display panel 100 and a line of sight of a viewer of an image displayed by the display panel 100.

If the viewer's line of sight is vertical to the center of the display panel, the corresponding viewing angle may be 0°. In one or more embodiments, viewing angles associated with acceptable image quality may be in a range from - 70° to+70°.

FIG. 4 is a graph illustrating reduction rate of luminance to regions of a display panel of a typical curved liquid crystal display device. FIG. 5 is a graph illustrating electrode misalignment according to regions of a display panel of a typical curved liquid crystal display device.

A typical curved liquid crystal display device may include a display panel. An upper substrate of the display panel may have a common electrode where a slit is formed. A color filter and a black matrix may be provided at the upper substrate of the display panel.

FIGS. 4 and 5 illustrate luminance variation and misalignment associated with a display panel that has a radius of curvature of 3000 mm; FIGS. 4 and 5 further illustrate luminance variation and misalignment associated with a display panel that has a radius of curvature of 4000 mm.

Referring to FIG. 4, the reduction rate of luminance associated with the display panel that has the radius of curvature of 3000 mm may be larger than the reduction rate of luminance associated with the display panel that has the radius of curvature of 4000 mm.

Referring to FIG. 5, electrode misalignment variation associated with the display panel that has the radius of curvature of 3000 mm may be larger than electrode misalignment variation associated with the display panel that has the radium of curvature of 4000 mm.

In a typical curved liquid crystal display device, misalignment between a pixel electrode formed at a lower substrate and a common electrode having a slit may be inevitably given the curved shape of the display panel. Additionally or alternatively, misalignment may exist between a pixel electrode and a color filter and/or may exist between a pixel electrode and the black matrix.

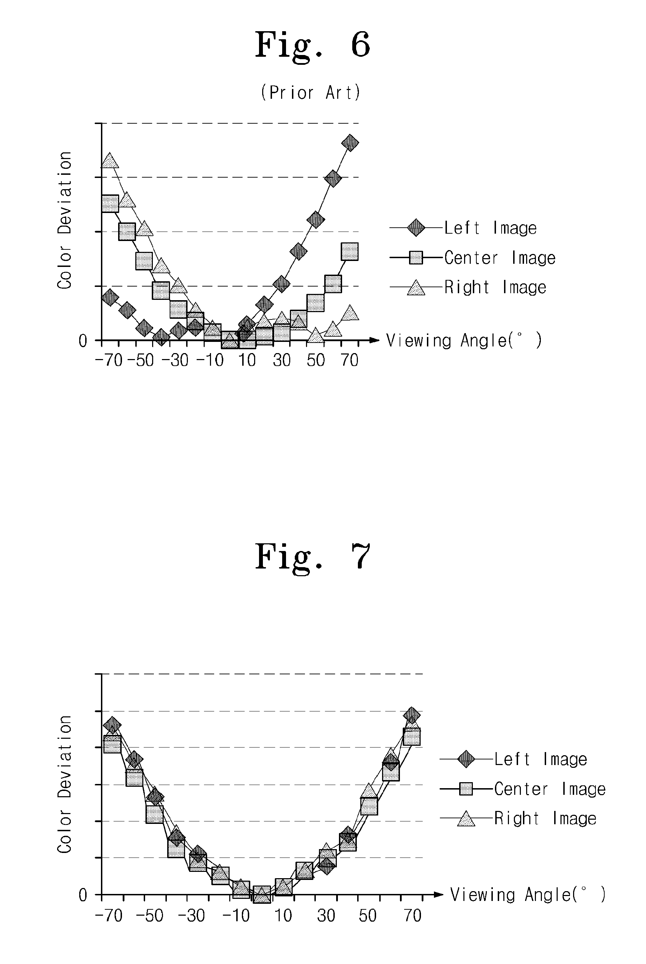

FIG. 6 is a graph illustrating color deviation according to viewing angle values for a typical curved liquid crystal display device. FIG. 7 is a graph illustrating color deviation according to viewing angle values for a curved liquid crystal display device according to one or more embodiments of the invention.

In a typical curved liquid crystal display device, a distance between a pixel electrode and a common electrode (which has a slit) may substantially vary because of misalignment between the pixel electrode and the common electrode. The distance variation may influence the intensity of the electric field formed at the liquid crystal layer between the pixel electrode and the common electrode.

Herein, the color deviation may represent a difference between a color value at a specific viewing angle and a color value at a viewing angle of 0°. The color values may be based on a well-known color coordinate system.

Referring to FIG. 6, a left image, a center image, and a right image may have different color deviations at a specific viewing angle other than 0°. Thus, even when the left image region, the center image region, and the right image region display a same color, the viewer may perceive different colors in the left image, the center image, and the right image.

For a curved liquid crystal display device according to one or more embodiments of the invention, referring to FIG. 7, the center image, and the right image may have substantially the same color deviation at one or more non-zero viewing angles as well as at the 0° viewing angle. Thus, when the left image region, the center image region, and the right image region display a same color, the viewer may perceive the same color in the left image, the center image, and the right image.

In one or more embodiments, misalignment may be prevented or minimized by forming a color filter CF and a black matrix BM at a first substrate 10 that is disposed between a backlight unit 200 and a liquid crystal layer LC (refer to FIG. 2) and by forming a common electrode CE with an entire plate without a slit (refer to FIG. 2). In one or more embodiments, uniformity of the intensity of the electric field between the common electrode CE and the pixel electrode (which includes sub-pixels PE1 and PE2) may be maintained by maintaining a substantially constant distance between the common electrode CE and each of the sub-pixels PE1 and PE2 in accordance with a curvature of the display device 1000.

In one or more embodiments, as illustrated in FIGS. 1 and 2, the common electrode CE may be an entire plate without slits. In one or more embodiments, the common electrode CE may have a slit. In one or more embodiments, a slit formed at the common electrode CE may be narrower than a slit formed at the pixel electrode PE. In one more embodiments, the common electrode CE may be divided into partial common electrodes by slits, and each of the partial common electrodes may be narrower than a width of each branch electrode of first and second sub-pixel electrodes PE1 and PE2.

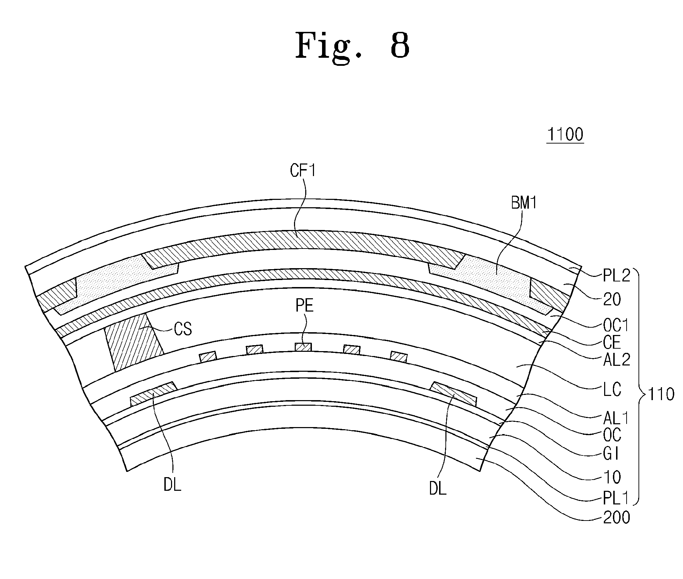

FIG. 8 is a cross-sectional view illustrating a curved liquid crystal display device 1100 (or display device 1100, for conciseness) according to one or more embodiments of the invention. A plan view of the display device 1100 may be analogous to the plan view illustrated in the example of FIG. 1.

Referring to FIG. 8, the display device 1100 may include a display panel 110 and a backlight unit 200. The backlight unit 200 may be substantially the same as a backlight unit 200 described with reference to FIGS. 1 and 2, and description thereof may be omitted. The display panel 110 may include elements that are substantially the same as or substantially analogous to elements of the display panel 100 described with reference to FIGS. 1 and 2, and description related to the same or analogous elements may be omitted.

In the display panel 110, a color filter CF1 and a black matrix BM1 may be formed on a second substrate 20, such that one or more of a common electrode CE, a liquid crystal layer LC, and a pixel electrode PE may be disposed between the backlight unit 200 and one or more of the color filter CF1 and the black matrix BM1.

The color filter CF1 may be disposed between the second substrate 20 and the common electrode CE and may correspond to a pixel region.

The black matrix BM1 may be disposed between the second substrate 20 and the common electrode CE and may correspond to an area between adjacent pixel regions. The black matrix BM1 may overlap one or more sides (or edges) of the color filter CF1, such that the one or more sides (or edges) of the color filter CF1 may be disposed between the second substrate 20 and portions of the black matrix BM1. The black matrix BM1 may cover a gate line, a data line, and a thin film transistor of the display device 1100 to prevent the gate line, the data line, and the thin film transistor from being substantially exposed light.

The display device 1100 may further comprise an upper common layer OC1. The upper common layer OC1 (or upper insulation layer OC1) may be formed of an insulation material, and may be formed on the color filter CF1 and the black matrix BM1.

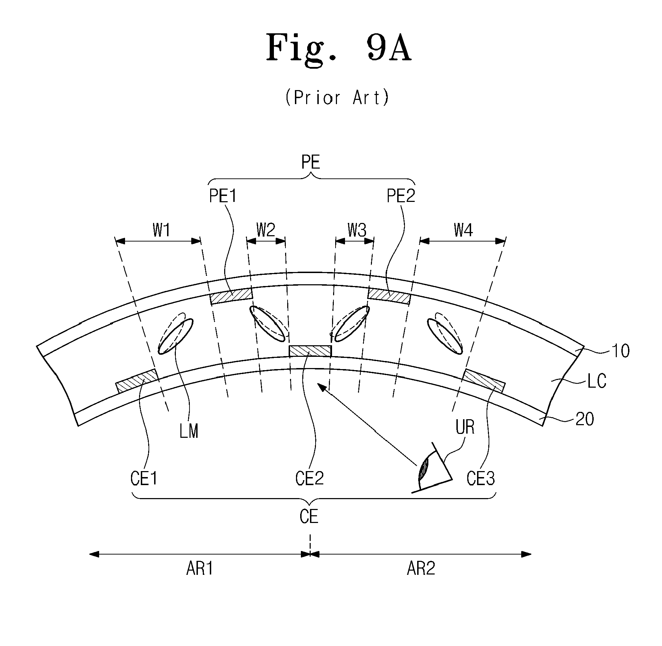

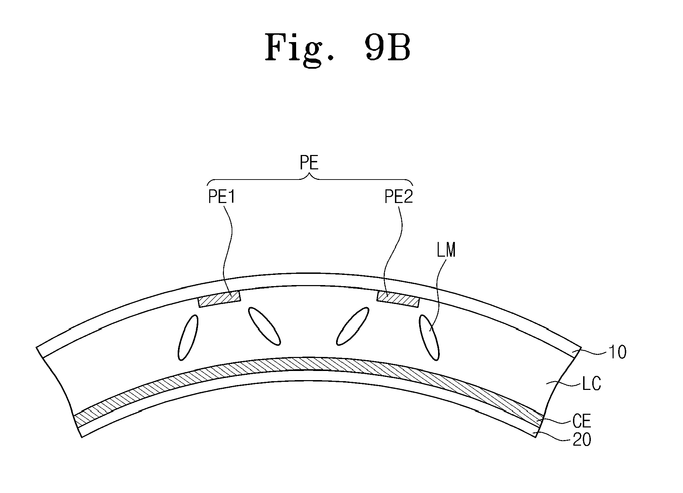

FIG. 9A is a diagram schematically illustrating a typical curved liquid crystal display device (or typical curved display device, for conciseness). FIG. 9B is a diagram schematically illustrating a curved liquid crystal display device according to one or more embodiments of the invention (or embodiment curved display device).

As illustrated in FIGS. 9A and 9B, each of the typical curved display device and the embodiment curved display device may include a first substrate 10, a second substrate 20, a pixel electrode PE, a liquid crystal layer LC, and a common electrode CE. Each of the typical curved display device and the embodiment curved display device may further include elements that are not shown in FIGS. 9A and 9B.

Referring to FIG. 9A, in the typical curved display device, the common electrode CE may be formed on the second substrate 20, and may be formed of a plurality of partial common electrodes CE1, CE2, and CE3 that are spaced from one another.

The pixel electrode PE may include a plurality of sub-pixel electrodes PE1 and PE2. The sub-pixel electrodes PE1 and PE2 may be spaced from each other.

A user UR (or viewer) may view an image displayed by a curved liquid crystal display device at a specific viewing angle. As illustrated in FIG. 9A, the user UR may view an image displayed by the typical curved display device at a right viewing angle. With the typical curved display device, since each of the substrates 10 and 20 have a curvature, distances between the partial common electrodes CE1, CE2, and CE3 and the sub-pixel electrodes PE1, PE2, and PE3 in in accordance with a curvature of the typical curved display device may substantially vary (according to the viewing angle).

A distance W1 between the first partial common electrode CE1 and the first sub-pixel electrode PE1 in accordance with the curvature of the typical curved display device may be longer than a distance W2 between the second partial common electrode CE2 and the first sub-pixel electrode PE1 in accordance with the curvature of the typical curved display device. A distance W3 between the second partial common electrode CE2 and the second sub-pixel electrode PE2 in accordance with the curvature of the typical curved display device may be shorter than a distance W4 between the third partial common electrode CE3 and the second sub-pixel electrode PE2 in accordance with the curvature of the typical curved display device.

The intensity of an electric field may be affected by differences among the distances W1, W2, W3, and W3. Thus, arrangement of liquid crystal particles LM may be affected and may substantially deviate from a desirable arrangement. In FIG. 9A, dotted liquid crystal particle outlines may indicate an arrangement of the liquid crystal particles LM when the user UR views an image displayed by the typical curved display device at a viewing angle of 0°, and solid liquid crystal particle outlines may indicate an arrangement of the liquid crystal particles LM when the user UR views the image displayed by the typical curved liquid crystal display device at a right viewing angle.

The typical curved display device may include a first region AR1 and a second region AR2 defined on the basis of the second partial common electrode CE2.

A variation of the arrangement of the liquid crystal particles LM may cause a color deviation with reference to the color value at the 0° viewing angle and/or may cause a color difference between the first region AR1 and the second region AR2. For example, when the user UR views an image displayed by the typical curved display device at a right viewing angle, the first region AR1 may display yellow, and the second region AR2 may display blue.

Referring to FIG. 9B, in the embodiment curved display device, a common electrode CE may be formed on the second substrate 20 as an entirely continuous, curved plate without any slits disposed between portions of the common electrode CE.

The pixel electrode PE may include a plurality of sub-pixel electrodes PE1 and PE2 spaced from each other.

In the embodiment curved display device, the common electrode CE may a curved continuous slitless plate. Therefore, that the distance between the common electrode and the sub-pixel electrode PE1 may be substantially equal to the distance between the common electrode CE and the sub-pixel electrode PE2 (in accordance with a curvature of the embodiment curved display device). Thus, the intensity of an electric field between the common electrode CE and each of the sub-pixel electrodes PE1 and PE2 may be substantially uniform, and the arrangement of the liquid crystal particles LM may be substantially uniform. Advantageously, the colors of images displayed by the embodiment curved display device may be substantially consistent regardless of the viewing angle of a user.

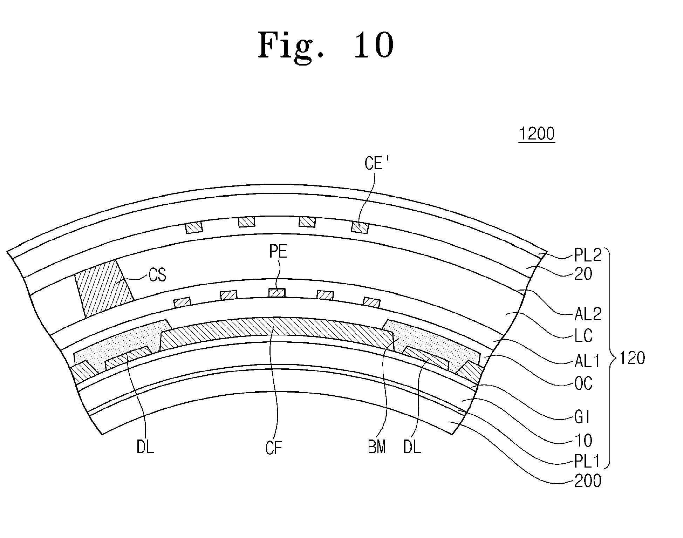

FIG. 10 is a cross-sectional view illustrating a curved liquid crystal display device 1200 (or display device 1200, for conciseness) according to one or more embodiments of the invention. A plan view of the display device 1200 may be analogous to the plan view illustrated in the example of FIG. 1.

Referring to FIG. 10, the display device 1200 may include a display panel 120 and a backlight unit 200. The backlight unit 200 may be substantially the same as a backlight unit 200 described with reference to FIGS. 1 and 2, and description thereof may be omitted. The display panel 120 may include elements that are substantially the same as or substantially analogous to elements of the display panel 100 described with reference to FIGS. 1 and 2, and description related to the same or analogous elements may be omitted.

In the display panel 120, a common electrode CE' may be provided on a second substrate 20. The common electrode CE' may include a plurality of partial common electrodes spaced from one another.

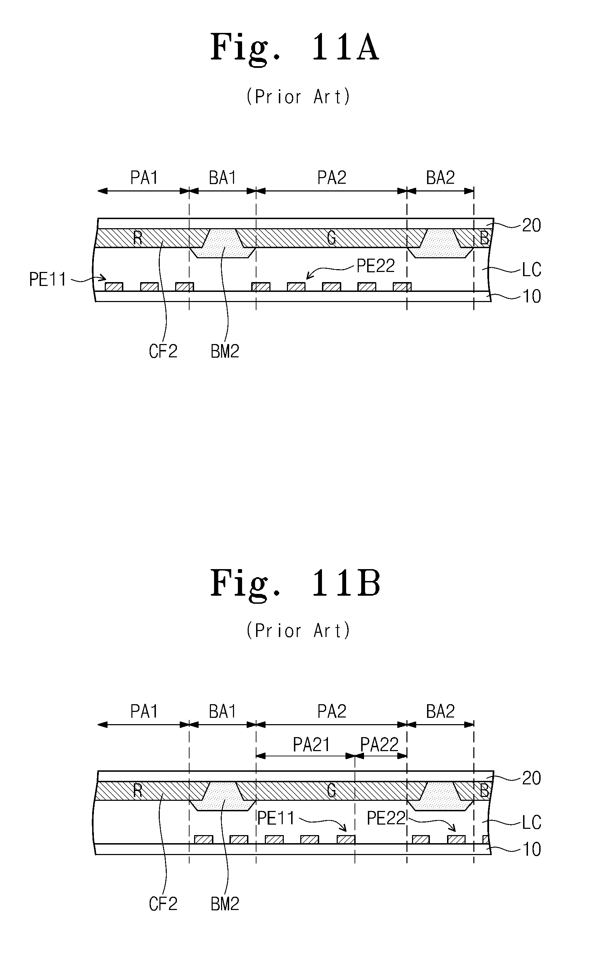

FIG. 11A is a cross-sectional view illustrating a display panel of a typical curved liquid crystal display device as viewed by a viewer at a viewing angle of 0°. FIG. 11B is a cross-sectional view illustrating the display panel of the typical curved liquid crystal display device as viewed by a viewer at a left viewing angle.

The typical curved liquid crystal display device is illustrated as flat in FIGS. 11A and 11B for describing misalignment. In practice, the typical curved liquid crystal display device may have a specific curvature.

As illustrated in FIGS. 11A and 11B, the typical curved liquid crystal display device may include a first substrate 10, a second substrate 20, a color filter CF2, a black matrix BM2, a liquid crystal layer LC, and pixel electrodes PE11 and PE22. The typical curved liquid crystal display device may include other components that are well-known and are not shown in FIGS. 11A and 11B. The color filter CF2 may include a red color filter R for displaying a red color, a green color filter G for displaying a green color, and a blue color filter B for displaying a blue color.

Referring to FIG. 11A, the typical curved liquid crystal display device may include a first pixel region PA1 and a second pixel region PA2, at which images are substantially displayed, and a first black region BA1 and a second black region BA2 each being disposed between adjacent pixel regions.

The first black region BA1 and the second black region BA2 may be a region where the black matrix BM2 is formed and may display black by blocking input light.

The first pixel region PA1 and the second pixel region PA2 may overlap the pixel electrodes PE11 and PE22 and the color filter CF2 to display images. In particular, at the first pixel region PA1, the first pixel electrode PE11 may overlap the red color filter R to display a red image. At the second pixel region PA2, the second pixel electrode PE22 may overlap the green color filter G to display a green image.

As illustrated in FIG. 11A, there may be no misalignment between pixel electrodes and color filters when the viewer views an image displayed by the typical curved liquid crystal display device at a viewing angle of 0°.

Referring to FIG. 11B, misalignment may occur when the viewer views an image displayed by the typical curved liquid crystal display device at a left viewing angle. Given that the viewer is shifted the left, if the second substrate 20, the color filter CF2, and the black matrix BM2 formed at the second substrate 20 do not change positions, the first substrate 10 and pixel electrodes PE11 and PE22 formed at the first substrate 10 may be shifted to the right from the viewer's view point, as illustrated in FIG.11. As the left viewing angle increases (i.e., the user moves further to the left with respect to a front center of the typical curved liquid crystal display device), as perceived by the viewer, the first substrate 10 and the pixel electrodes PE11 and PE22 may be shifted further to the right.

Referring to FIG. 11B, the black regions BA1 and BA2 may still display black due to existence of the black matrix.

Not overlapping the first pixel electrode PE11, the first pixel region PA1 may display black. At a part PA21 of the second pixel region PA2, the first pixel electrode PE11 may overlap the green color filter G to display green. At this time, although the first pixel electrode PE11 receives data for displaying red, it may overlap the green color filter G to display an unintended green image at the part PA21 of the second pixel region PA2.

The remaining region PA22 of the second pixel region PA2 may not overlap either of the pixel electrode PE11 and PE22 and therefore may display black.

In the typical liquid crystal display device illustrated in FIGS. 11A and 11B, misalignment between a pixel electrode and a color filter and unintended alignment between the pixel electrode and a black matrix may occur when the viewer views an image at a non-zero viewing angle; as a result, mixing of color and reduction of luminance in the image may occur.

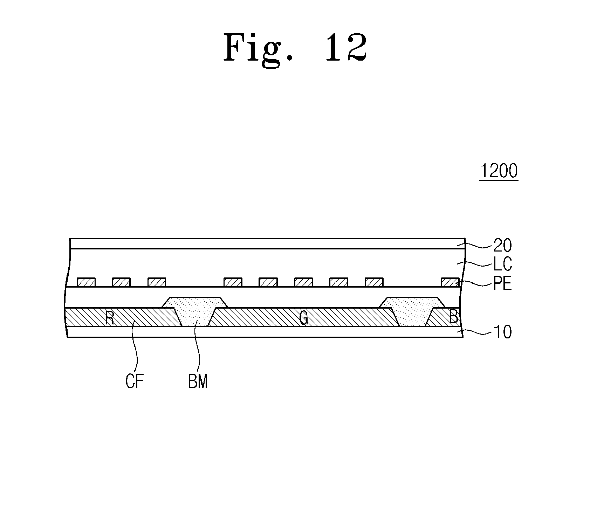

FIG. 12 is a cross-sectional view illustrating a display panel of a curved liquid crystal display device according to one or more embodiments of the invention.

Referring to FIG. 12, a pixel electrode PE, a color filter CF, and a black matrix BM may be formed on a first substrate 10.

In one or more embodiments of the invention, since the color filter CF and the black matrix BM are formed on the first substrate 10 such that the pixel electrode PE is disposed between a substantial portion of the liquid crystal layer LC and the color filter CF without any portion of the liquid crystal layer LC being disposed between the pixel electrode PE and either of the color filter CF and the black matrix BM, a distance between the pixel electrode PE and each of the color filter CF and the black matrix BM may be minimized. Thus, substantial alignment between the pixel electrode PE and the color filter CF may be ensured for various viewing angles, and unintended alignment between the pixel electrode PE and the black matrix BM may be minimized for various viewing angles.

While the invention has been described with reference to embodiments, it will be apparent to those skilled in the art that various changes and modifications may be made without departing from the spirit and scope of the present invention. The above embodiments are not limiting, but illustrative.

## Claims

1. A display device comprising:
a first curved substrate;
a second curved substrate overlapping the first curved substrate;
a pixel electrode formed on the first curved substrate, wherein the pixel electrode is disposed between the first curved substrate and the second curved substrate and the pixel electrode includes a first branch electrode and a second branch electrode that is spaced from the first branch electrode;
a common electrode formed on the second curved substrate, wherein the common electrode includes a slitless portion that overlaps both the first branch electrode and the second branch electrode and the common electrode does not have any slits; and
a liquid crystal element disposed between the pixel electrode and the common electrode.

2. The display device of claim 1, further comprising a color filter that overlaps the pixel electrode, wherein the pixel electrode is disposed between the color filter and the liquid crystal element.

3. The display device of claim 2, further comprising a black matrix, wherein a portion of the black matrix overlaps an edge portion of the color filter and is disposed between the edge portion of the color filter and the slitless portion.

4. The display device of claim 2, further comprising:
an alignment film configured to pretilt particles in the liquid crystal element; and
a black matrix,
wherein a portion of the black matrix overlaps an edge portion of the color filter and is disposed between the edge portion of the color filter and the alignment film.

5. The display device of claim 1,
wherein the pixel electrode further includes a third branch electrode and a connection electrode,
wherein each of the first branch electrode and the second branch electrode extends in a first direction,
wherein the third branch electrode extends in a second direction that is different from the first direction,
wherein the connection electrode is electrically connected to both ends of the first branch electrode, both ends of the second branch electrode, and both ends of the third branch electrode, and
wherein the slitless portion of the common electrode further overlaps at least one of the third branch electrode and the connection electrode.

6. The display device of claim 1,
wherein the first curved substrate includes a first curvature that is associated with a first radius of curvature,
wherein the second curved substrate includes a second curvature that is associated with a second radius of curvature, and
wherein the first radius of curvature is equal to the second radius of curvature.

7. The display device of claim 1,
wherein the first curved substrate includes a first curvature that is associated with a first radius of curvature, and
wherein the first radius of curvature is less than 5000 mm.

8. The display device of claim 1, wherein the first curved substrate includes a plurality of curvatures.

9. The display device of claim 1, further comprising an alignment film configured to pretilt particles in the liquid crystal element, wherein the pixel electrode is disposed between the color filter and the alignment film.

10. The display device of claim 1, further comprising a curved backlight unit configured to provide light, wherein the color filter is disposed between the pixel electrode and the curved backlight unit.

11. The display device of claim 10, further comprising a black matrix configured to block a portion of the light, wherein an edge portion of the color filter is disposed between the curved backlight unit and a portion of the black matrix.

12. The display device of claim 1, further comprising a curved backlight unit configured to provide light, wherein the pixel electrode is disposed between the color filter and the curved backlight unit.

13. The display device of claim 12, further comprising a black matrix configured to block a portion of the light, wherein a portion of the black matrix is disposed between the curved backlight unit and an edge portion of the color filter.

## Amended claims

### Amended claims in accordance with Rule 137(2) EPC.

**1.** A display device (1100) comprising:
a first curved substrate (10);
a second curved substrate (20) overlapping the first curved substrate (10);
a pixel electrode (PE) formed on the first curved substrate (10),
wherein the pixel electrode (PE) is disposed between the first curved substrate and the second curved substrate and the pixel electrode includes a first branch electrode portion and a second branch electrode portion that is spaced from the first branch electrode portion;
a common electrode (CE) formed on the second curved substrate (20), wherein the common electrode overlaps both the first branch electrode portion and the second branch electrode portion and the common electrode does not have any slits;
a liquid crystal element (LC) disposed between the pixel electrode (PE) and the common electrode (CE) a color filter that overlaps the pixel electrode, wherein the pixel electrode is disposed between the color filter and the liquid crystal element, and
a black matrix, wherein a portion of the black matrix overlaps an edge portion of the color filter and is disposed between the edge portion of the color filter and the common electrode (CE).

**2.** The display device of claim 1, further comprising:
an alignment film configured to pretilt particles in the liquid crystal element;
wherein a portion of the black matrix overlaps an edge portion of the color filter and is disposed between the edge portion of the color filter and the alignment film.

**3.** The display device of claim 1,
wherein the pixel electrode further includes a third branch electrode portion and a connection electrode portion,
wherein each of the first branch electrode portion and the second branch electrode portion extends in a first direction,
wherein the third branch electrode portion extends in a second direction that is different from the first direction,
wherein the connection electrode portion is electrically connected to both ends of the first branch electrode portion, both ends of the second branch electrode portion, and both ends of the third branch electrode portion, and
wherein the common electrode further overlaps at least one of the third branch electrode portion and the connection electrode portion.

**4.** The display device of claim 1,
wherein the first curved substrate includes a first curvature that is associated with a first radius of curvature,
wherein the second curved substrate includes a second curvature that is associated with a second radius of curvature, and
wherein the first radius of curvature is equal to the second radius of curvature.

**5.** The display device of claim 1,
wherein the first curved substrate includes a first curvature that is associated with a first radius of curvature, and
wherein the first radius of curvature is less than 5000 mm.

**6.** The display device of claim 1, wherein the first curved substrate includes a plurality of curvatures.

**7.** The display device of claim 1, further comprising an alignment film configured to pretilt particles in the liquid crystal element, wherein the pixel electrode is disposed between the color filter and the alignment film.

**8.** The display device of claim 1, further comprising a curved backlight unit configured to provide light, wherein the color filter is disposed between the pixel electrode and the curved backlight unit.

**9.** The display device of claim 8, further comprising a black matrix configured to block a portion of the light, wherein an edge portion of the color filter is disposed between the curved backlight unit and a portion of the black matrix.

**10.** A display device (1100) comprising:
a first curved substrate (10);
a second curved substrate (20) overlapping the first curved substrate(10);
a pixel electrode (PE) formed on the first curved substrate (10),
wherein the pixel electrode (PE) is disposed between the first curved substrate and the second curved substrate and the pixel electrode includes a first branch electrode portion and a second branch electrode portion that is spaced from the first branch electrode portion;
a common electrode (CE) formed on the second curved substrate(20), wherein the common electrode overlaps both the first branch electrode portion and the second branch electrode portion and the common electrode does not have any slits;
a color filter (CF1) and a black matrix (BM1) formed on the second substrate (20);
a liquid crystal element (LC) disposed between the pixel electrode (PE) and the common electrode (CE),
a curved backlight unit configured to provide light, wherein the pixel electrode is disposed between the color filter and the curved backlight unit, and
the black matrix (BM1) configured to block a portion of the light,
wherein a portion of the black matrix is disposed between the curved backlight unit and an edge portion of the color filter.
